# EUROPÄISCHE PATENTSCHRIFT

(11) **EP 2 439 051 B1**
(45) Veröffentlichungstag und Bekanntmachung des Hinweises auf die Patenterteilung: **25.03.2015**
(21) Anmeldenummer: 11169223.2
(22) Anmeldetag: 09.06.2011
(51) Int. Cl.: B29C 63/22, F16B 19/10

(54) **Korrosionsschutz für ein gelochtes Blechteil**
Corrosion protection for a perforated piece of sheet metal
Protection anti-corrosion pour un élément en tôle percé

(30) Priorität: 21.07.2010 DE 102010031603
(43) Veröffentlichungstag der Anmeldung: 11.04.2012
(73) Patentinhaber: Bayerische Motoren Werke Aktiengesellschaft, 80809 München (DE)
(72) Erfinder: Dr.Gaßner, Franz, 86561 Oberlauterbach (DE)

(56) Entgegenhaltungen:
- US-A- 4 865 792

## Beschreibung

Die Erfindung bezieht sich auf ein Verfahren zum Herstellen eines Korrosionsschutzes an einem lackierten und im lackierten Zustand gelochten Blech- und insbesondere Karosserie-Blechteil, nach dem Oberbegriff des Patentanspruchs 1.

Lackierte Karosserie-Blechteile einschließlich solcher, die auf der Sichtseite mit einer Lackfolie belegt sind, müssen häufig im lackierten Zustand zur Befestigung von Anbauteilen, etwa Dachrelings, Zierleisten oder Rückfahrkameras, nachträglich gelocht werden und werden dann aus Korrosionsschutzgründen an den so frei gelegten Lochbereichen üblicherweise z. B. durch eine Hartwachsschicht versiegelt.

Ferner ist aus der US 4 865 792 A ein Verfahren zum Delaminationsschutz eines gelochten Faserverbundbauteils bekannt, bei dem das Faserverbundbauteil im Lochbereich durch eine beidseitig flanschartig erweiterte Tülle verstärkt wird, welche ebenfalls aus Faserverbundwerkstoff vorgefertigt und gemeinsam mit dem Faserverbundbauteil konsolidiert wird.

Aufgabe der Erfindung ist es, ein im lackierten Zustand gelochtes Blechteil auf fertigungstechnisch einfache Weise dauerhaft gegen Korrosionserscheinungen im Lochbereich zu schützen.

Diese Aufgabe wird erfindungsgemäß durch den im Patentanspruch 1 gekennzeichneten Korrosionsschutz gelöst.

Erfindungsgemäß werden die nach dem Lochen des lackierten Blechteils frei gelegten Problemzonen mit einer thermisch aktivierten und unter Druckeinwirkung aufgebrachten Kunststofffolie derart belegt, dass sich diese mit inniger, flächiger Bindung über die Lochleibung und den Lochrand bis über die angrenzenden, noch unverletzten Lackbereiche erstreckt und so auf herstellungsmäßig einfache, seriengerechte Weise einen lokal abgegrenzten, dauerhaft wirksamen Korrosionsschutz im kritischen Lochbereich des ansonsten lackgeschützten Blechteils garantiert.

In vorteilhafter Ausgestaltung der Erfindung wird ein fertigungstechnisch weiter vereinfachter und bindungsstarker Korrosionsschutz des Lochbereichs dadurch erreicht, dass die Kunststofffolie gemäß Anspruch 2 im Wege des Heißprägens mit einer beheizten Prägerolle aufgebracht wird.

Zwar lässt sich zur Beschichtung des Lochbereichs ohne Weiteres auch ein Kunststoffband verwenden, wiederum aus Gründen einer vereinfachten Herstellungsweise wird die Kunststofffolie gemäß Anspruch 3 jedoch als vorgeformte Kunststoffhülse in das Blechloch eingesetzt und dann mit dem Lochbereich korrosionsfest verbunden.

Zweckmäßigerweise wird nicht nur der lackseitig, sondern gemäß Anspruch 4 auch der auf der Unterseite des Blechteils an die Lochleibung angrenzende Randbereich mit der Kunststofffolie beschichtet, um auch an dieser Stelle einen dauerhaft sicheren Korrosionsschutz des Blechteils zu gewährleisten.

Als für den angegebenen Korrosionsschutz besonders günstiges Beschichtungsmaterial hat sich, wie nach Anspruch 5 bevorzugt, eine Kunststofffolie auf Polymerbasis erwiesen.

Die Erfindung wird nunmehr anhand eines Ausführungsbeispiels in Verbindung mit den Zeichnungen näher erläutert. Es zeigen in stark schematisierter Darstellung:
- **Fig. 1**: ein Kraftfahrzeug-Blechteil im Lochbereich zusammen mit einer entsprechend vorgeformten Kunststoffhülse im Schnitt vor dem Beschichtungsprozess, und
- **Fig. 2**: eine der Fig. 1 entsprechende Darstellung des Lochbereichs während des Beschichtungsprozesses mit Hilfe einer beheizten Prägerolle.

Das in den Fign. gezeigte Blechteil 1 ist auf der Sichtseite mit einer Lackschicht 2 und auf der Unterseite üblicherweise ebenfalls mit einer Korrosionsschutzschicht 3 belegt, z. B. verzinkt und zur Montage von Anbauteilen, etwa einer Dachreling oder einer Zierleiste, mit nachträglich eingestanzten Befestigungslöchern 4 versehen. Die dabei frei gelegte Lochleibung 5 und die an diese beidseitig angrenzenden Randbereiche 6, 7, an denen bei der Lochung entstehenden Verletzungen in den Beschichtungen 2 bzw. 3 unvermeidbar sind, sind daher ungeschützt und dementsprechend korrosionsgefährdet.

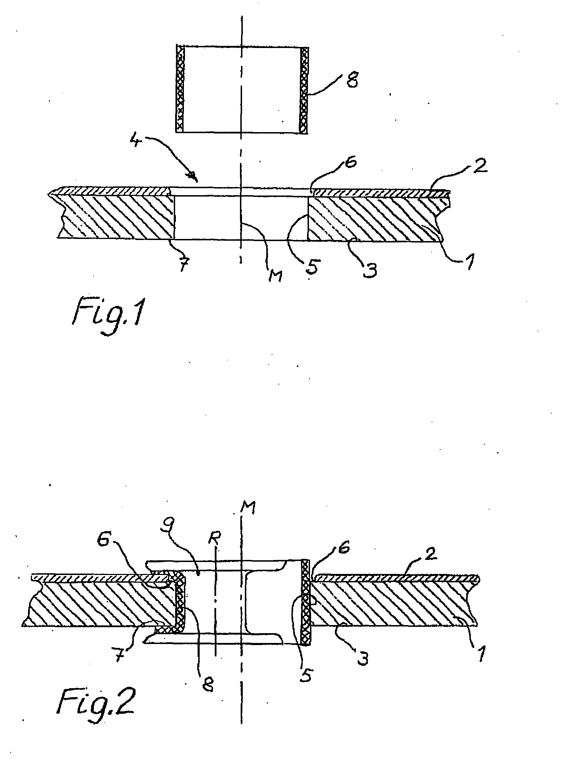

Um diese kritischen Lochbereiche 5, 6, 7 wirksam vor Korrosionserscheinungen zu schützen, wird erfindungsgemäß eine zur Lochkontur konforme Kunststoffhülse 8, die aus einer unter Wärmeeinwirkung verformbaren Polymerfolie vorgefertigt ist, welche im erwärmten Zustand entweder selbst klebefähig oder auf der Außenseite mit einer thermisch aktivierbaren Klebstoffschicht belegt ist, in das Befestigungsloch 4 eingesetzt und anschließend wird die Kunststoffhülse 8 im Wege des Heißprägeverfahrens mit Hilfe einer beheizten, nach Art einer Garnrolle endseitig erweiterten Prägerolle 9, die um die Rollenachse R drehbar und auf einer Orbitalbahn um die zentrale Lochachse M z. B. robotergeführt ist, unter inniger flächiger Verklebung an die Lochleibung 5 angedrückt und - wie aus dem linken Teil der Fig. 2 ersichtlich ist - beidseitig an die angrenzenden Randbereiche 6, 7 bis über die noch intakten Beschichtungszonen 2, 3 pressverformt, so dass die durch die Lochung frei gelegten Lochbereiche 5, 6 und 7 korrosionssicher geschützt sind.

Im Rahmen der Erfindung sind zahlreiche Abwandlungen möglich. So kann die Kunststoffhülse 8 am einen Hülsenende bereits mit einer einstückig angeformten, flanschartigen Erweiterung vorgefertigt werden und anstelle einer Kunststoffhülse lässt sich ohne Weiteres auch eine Kunststofffolie in Form eines Kunststoffbandes in ansonsten gleicher Weise applizieren. Ferner ist der beschriebene Korrosionschutz auch für Blechteile verwendbar, bei denen eine Schutzschicht auf der Blechunterseite entbehrlich ist, wobei in diesem Fall auf die flanschartige Erweiterung der Kunststofffolie am unteren Lochende verzichtet werden kann.

## Patentansprüche

1. Verfahren zum Herstellen eines Korrosionsschutzes an einem lackierten und im lackierten Zustand gelochten Blech- und insbesondere Karosserie-Blechteil (1), wobei
auf die Lochleibung (5) und zumindest den an diese auf der lackierten Blechseite angrenzenden Randbere ich (6) des Blechteils (1) eine korrosionsfeste Schutzschicht in Form einer thermisch aktivierbaren Kunststofffolie (8) im klebefähig erwärmten Zustand unter Druckeinwirkung aufgetragen wird.

2. Verfahren nach Anspruch 1, **dadurch gekennzeichnet, dass**
die Kunststofffolie (8) im Wege des Heißprägens mit einer beheizten Prägerolle (9) aufgebracht wird.

3. Verfahren nach Anspruch 1 oder 2, **dadurch gekennzeichnet, dass** die Kunststofffolie als zur Lochkontur konforme Kunststoffhülse (8) vorgeformt wird.

4. Verfahren nach einem der vorhergehenden Ansprüche, **dadurch gekennzeichnet, dass**
die auf beiden Seiten des Blechteils (1) an die Lochleibung (5) angrenzenden Randbereiche (6, 7) mit der Kunststofffolie (8) belegt werden.

5. Verfahren nach einem der vorhergehenden Ansprüche, **dadurch gekennzeichnet, dass**
die Kunststofffolie (8) aus einer Polymerfolie hergestellt wird.

## Claims

1. A method of producing an anti-corrosive layer on a painted and subsequently perforated sheet-metal component, especially a car body part (1), wherein
a corrosion-resistant protective layer in the form of a heat-activatable plastics material foil (8) made sticky by heating is applied under pressure to the inner surface (5) of the hole and at least to the edge regions (6) of the part (1) adjoining the painted side of the hole.

2. A method according to claim 1, **characterised in that** during the hot foil stamping process the plastics material foil (8) is applied with a heated stamping roller (9).

3. A method according to claim 1 or claim 2, **characterised in that** the plastics material foil is preformed as a sheath (8) following the contour of the hole.

4. A method according to any of the preceding claims, **characterised in that** the edge regions (6, 7) adjoining the inner surface (5) on both sides of the part (1) are coated with the plastics material foil (8).

5. A method according to any of the preceding claims, **characterised in that** the plastics material foil (8) is made from a polymer foil.

## Revendications

1. Procédé d'obtention d'une protection anti-corrosion sur une pièce en tôle (1) et en particulier une pièce de carrosserie en tôle, vernie et percée à l'état verni selon lequel sur la paroi interne (5) du perçage et au moins la zone de bord (6) de la pièce en tôle (1) voisine de celui-ci sur la face vernie de la tôle on applique sous l'action de la pression une couche de protection résistant à la corrosion sous la forme d'une feuille (8) en un matériau synthétique pouvant être activé thermiquement dans un état chauffé adhésif.

2. Procédé conforme à la revendication 1,
**caractérisé en ce que**
la feuille en matériau synthétique (8) est appliquée par estampage à chaud avec un rouleau d'estampage (9) chauffé.

3. Procédé conforme à la revendication 1 ou 2,
**caractérisé en ce que**
la feuille en matériau synthétique est préalablement mise sous la forme d'un manchon (8) en matériau synthétique conforme aux contours du perçage.

4. Procédé conforme à l'une des revendications précédentes,
**caractérisé en ce que**
les zones de bord (6, 7) voisines de la paroi du perçage (5) sur les deux faces de la partie en tôle (1) sont garnies de la feuille en matériau synthétique (8).

5. Procédé conforme à l'une des revendications précédentes,
**caractérisé en ce que**
la feuille en matériau synthétique (8) est obtenue à partir d'une feuille polymère.
